(19) Europäisches Patentamt
European Patent Office
Office européen des brevets

(11) **EP 4 656 379 A1**

(12) **EUROPEAN PATENT APPLICATION**

(43) Date of publication:
**03.12.2025 Bulletin 2025/49**

(21) Application number: **24178593.0**

(22) Date of filing: **28.05.2024**

(51) International Patent Classification (IPC):
**B32B 27/08** (2006.01)     **B32B 27/32** (2006.01)
**C08F 2/00** (2006.01)     **C08F 210/06** (2006.01)
**C08F 210/16** (2006.01)     **C08L 23/12** (2006.01)
**C08L 23/16** (2006.01)

(52) Cooperative Patent Classification (CPC):
(C-Sets available)
**B32B 27/08; B32B 27/32; C08F 210/06;
C08L 23/12; C08L 23/16;** B32B 2250/03;
B32B 2250/242; B32B 2307/31; B32B 2307/412;
B32B 2307/54; B32B 2307/7376     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH
1020 Vienna (AT)**

(72) Inventors:
• **ROMANENKO, Yuliia
4021 Linz (AT)**
• **WANG, Jingbo
4021 Linz (AT)**

• **GAHLEITNER, Markus
4021 Linz (AT)**
• **NIEDERSUESS, Peter
4021 Linz (AT)**
• **ORTNER, Stefan
4021 Linz (AT)**
• **VAN EIJNDHOVEN, Maria
Beringen (BE)**
• **BACHTROD, Quang Manfred
4021 Linz (AT)**

(74) Representative: **Maiwald GmbH
Elisenhof
Elisenstraße 3
80335 München (DE)**

(54) **RECYCLABLE MULTILAYER FILMS HAVING A RAHECO/PROPYLENE HOMOPOLYMER-BASED CORE LAYER**

(57)     A polypropylene-based multilayer film (F), comprising, in the given order, the following layers:
(A) a skin layer;
(B) a core layer comprising at least 90 wt.-% of a polypropylene composition comprising:
i) from 20 to 80 wt.-% of a RAHECO having an $MFR_2$ of 0.5 to 10.0 g/10 min, a CRYSTEX soluble fraction of 20 to 50 wt.-%, a CRYSTEX crystalline fraction of 50 to 80 wt.- %, a C2 content of 9.0 to 16.0 wt.-%, and a C2(SF) of 15.0 to 35.0 wt.-%, and from 20.0 to 80, and
ii) from 20 to 80 wt.-% of a propylene homopolymer (h-PP),
wherein the combined amounts of the RAHEO and h-PP are at least 90 wt.-%; and
(C) a sealing layer.

EP 4 656 379 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/651;**
C08F 110/06, C08F 2500/12;
C08F 210/06, C08F 210/16, C08F 2500/12,
C08F 2500/27;
C08F 210/06, C08F 210/16, C08F 2500/12,
C08F 2500/27, C08F 2500/35;
C08F 210/06, C08F 210/16, C08F 2500/12,
C08F 2500/27, C08F 2500/35, C08F 2500/17,
C08F 2500/34, C08F 2500/33, C08F 2500/30,
C08F 2500/26

**Description**

**Field of the Invention**

The present invention relates to a polypropylene-based multilayer film (F) comprising a skin layer, a core layer and a sealing layer, wherein the core layer comprises a RAHECO having certain properties and a propylene homopolymer.

**Background to the Invention**

Plastic packaging is widely used in daily life due to a favorable cost/performance ratio. Polyolefins are easy and economical to produce with good properties and are widely used in plastic packaging.

Conflicting properties are often required in the packing industry. For example, high stiffness and toughness as well as excellent sealing behavior and good optical properties are required in parallel for plastic films. Different types of polyolefin, for example polypropylene and polyethylene, are routinely combined in blends and/or used in different layers of multilayer films to achieve desired properties. However, use of more than one polymer type, such as combinations of polyethylene terephthalate) (PET) or polyamide(s) with polyolefins, complicates the task of recycling the resulting plastic packaging.

One approach to enabling recycling is a 'single material solution', where only one type of polymer material is used. This simplifies recycling of both post-consumer waste and manufacturing waste but limits the range of properties that are available. As such, there is still a need for plastic packaging that may be formed from a single polymer type though comprising various different polymer grades within that polymer type, optimizing the mechanical, optical and sealing properties required for packaging materials, whilst also being straightforward to mechanically recycle with the resultant recyclate also having a good balance of properties.

In particular, it is important to be able to access multilayer films having excellent sealing properties at lower temperatures (without sacrificing other valuable properties, such as mechanical and optical properties), which helps to reduce manufacturing costs involved in the sealing step, as well as being more sustainable at low temperatures. Improved mechanical properties are also desirable.

**Summary of the Invention**

Therefore, the present invention is directed to a multilayer film (F), comprising, in the given order, the following layers:

(A) a skin layer, comprising at least 90 wt.-%, based on the total weight of the skin layer, of a polypropylene or mixture of polypropylenes;

(B) a core layer, comprising least 90 wt.-%, based on the total weight of the core layer, of a first polypropylene composition (PC1) comprising the following components:

a) from 20.0 to 80.0 wt.-%, relative to the total weight of the first polypropylene composition (PC1), of a random heterophasic propylene-ethylene copolymer (RAHECO) comprising the following components:

a1) a crystalline matrix (M) being a propylene-ethylene random copolymer; and
b1) an amorphous propylene-ethylene elastomer (E),
wherein the random heterophasic propylene-ethylene copolymer (RAHECO) has the following properties:

i) a melt flow rate ($MFR_2$), determined according to ISO 1133 at 230 °C and 2.16 kg, in the range from 0.5 to 10.0 g/10 min;
ii) a soluble fraction (SF) content in the range from 20 to 50 wt.-% and a crystalline fraction (CF) content in the range from 50 to 80 wt.-%, both determined according to CRYSTEX analysis;
iii) an ethylene content (C2(total)), determined by CRYSTEX analysis, in the range from 9.0 to 16.0 wt.-%; and
iv) an ethylene content of the soluble fraction (C2(SF)), determined by CRYSTEX analysis, in the range from 15.0 to 35.0 wt.-%, and

b) from 20.0 to 80.0 wt.-%, relative to the total weight of the first polypropylene composition (PC1), of a propylene homopolymer (h-PP),

wherein the combined amounts of the random heterophasic propylene-ethylene copolymer (RAHECO) and the propylene homopolymer (h-PP) are at least 90 wt.-%, relative to the total weight of the first polypropylene composition (PC1); and

(C) a sealing layer, comprising at least 90 wt.-%, based on the total weight of the sealing layer, of a polypropylene or mixture of polypropylenes.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene copolymer is a copolymer of propylene monomer units and comonomer units, preferably selected from ethylene and $C_4$-$C_8$ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.

Heterophasic propylene copolymers typically comprise:

a) a crystalline propylene homopolymer or copolymer matrix (M); and
b) an elastomeric rubber, preferably a propylene-ethylene elastomer (E);

The elastomeric rubber component is amorphous, i.e. non-crystalline in nature.

In case of a random-heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a one-phasic propylene copolymer in that it shows two distinct glass transition temperatures Tg which are attributed to the matrix phase and the elastomeric phase.

The present invention will now be described in more detail.

## Detailed Description

The present invention is directed to a polypropylene-based multilayer film (F), comprising, in the given order, the following layers:

(A) a skin layer;
(B) a core layer; and
(C) a sealing layer.

## Core layer

The core layer (B) of the present invention comprises at least 90 wt.-%, more preferably at least 95 wt.-%, yet more preferably at least 98 wt.-%, based on the total weight of the core layer, of a first polypropylene composition (PC1). In a particularly preferred embodiment, the core layer (B) consists of the first polypropylene composition (PC1).

The first polypropylene composition (PC1) comprises the following components:

a) from 20.0 to 80.0 wt.-%, relative to the total weight of the first polypropylene composition (PC1), of a random heterophasic propylene-ethylene copolymer (RAHECO); and
b) from 20.0 to 80.0 wt.-%, relative to the total weight of the first polypropylene composition (PC1), of a propylene homopolymer (h-PP).

More preferably, the first polypropylene composition (PC1) comprises the following components:

a) from 35.0 to 70.0 wt.-%, relative to the total weight of the first polypropylene composition (PC1), of a random heterophasic propylene-ethylene copolymer (RAHECO); and
b) from 30.0 to 65.0 wt.-%, relative to the total weight of the first polypropylene composition (PC1), of a propylene homopolymer (h-PP).

Most preferably, the first polypropylene composition (PC1) comprises the following components:

a) from 50.0 to 65.0 wt.-%, relative to the total weight of the first polypropylene composition (PC1), of a random heterophasic propylene-ethylene copolymer (RAHECO); and
b) from 35.0 to 50.0 wt.-%, relative to the total weight of the first polypropylene composition (PC1), of a propylene homopolymer (h-PP).

The combined amounts of the random heterophasic propylene-ethylene copolymer (RAHECO) and the propylene homopolymer (h-PP) are at least 90 wt.-%, more preferably at least 95 wt.-%, most preferably at least 98 wt.-%, relative to the total weight of the first polypropylene composition (PC1).

If components other than the random heterophasic propylene-ethylene copolymer (RAHECO) and the propylene homopolymer (h-PP) are present in the first polypropylene composition (PC1), then it is preferred that these further components are additives.

The skilled practitioner would be able to select suitable additives that are well known in the art.

The additives are preferably selected from pigments, antioxidants, UV-stabilizers, nucleating agents, mold release agents, acid scavengers, lubricants, anti-static agents, and mixtures thereof.

It is understood that the content of additives includes any carrier polymers used to introduce the additives to the first polypropylene composition (PC1), i.e. masterbatch carrier polymers. An example of such a carrier polymer would be a polypropylene homopolymer in the form of powder.

It is preferred that the first polypropylene composition (PC1) has a melt flow rate (MFR$_2$), determined according to ISO 1133 at 230 °C and 2.16 kg, in the range from 8.0 to 30.0 g/10 min, more preferably in the range from 9.0 to 25.0 g/10 min, most preferably in the range from 9.5 to 20.0 g/10 min.

It is preferred that the first polypropylene composition (PC1) has a melting temperature (Tm), determined by differential scanning calorimetry (DSC) according to ISO 11357 / part 3 /method C2, in the range from 155 to 172 °C, more preferably in the range from 158 to 169 °C, most preferably in the range from 160 to 166 °C.

It is preferred that the first polypropylene composition (PC1) has a crystallization temperature (Tc), determined by differential scanning calorimetry (DSC) according to ISO 11357 / part 3 /method C2, in the range from 100 to 118 °C, more preferably in the range from 104 to 116 °C, most preferably in the range from 108 to 114 °C.

It is preferred that the polymeric part of the first polypropylene composition (PC1) has a soluble fraction (SF) content, determined according to CRYSTEX analysis, in the range from 10.0 to 30.0 wt.-%, more preferably in the range from 14.0 to 23.0 wt.-%, most preferably in the range from 16.0 to 19.0 wt.-%.

It is preferred that the polymeric part of the first polypropylene composition (PC1) has an ethylene content of the soluble fraction (C2(SF)), determined by CRYSTEX analysis, in the range from 15.0 to 36.0 wt.-%, more preferably in the range from 20.0 to 33.0 wt.-%, most preferably in the range from 24.0 to 30.0 wt.-%.

It is preferred that the polymeric part of the first polypropylene composition (PC1) has an intrinsic viscosity of the soluble fraction (iV(SF)), determined by CRYSTEX analysis, in the range from 1.00 to 3.00 dL/g, more preferably in the range from 120 to 2.00 dL/g, most preferably in the range from 1.40 to 1.70 dL/g.

It is preferred that the polymeric part of the first polypropylene composition (PC1) has a crystalline fraction (CF) content, determined by CRYSTEX analysis, in the range from 70.0 to 90.0 wt.-%, more preferably in the range from 77.0 to 86.0 wt.-%, most preferably in the range from 81.0 to 84.0 wt.-%.

It is preferred that the polymeric part of the first polypropylene composition (PC1) has an ethylene content of the crystalline fraction (C2(CF)), determined by CRYSTEX analysis, in the range from 1.0 to 6.0 wt.-%, more preferably in the range from 1.5 to 4.5 wt.-%, most preferably in the range from 2.0 to 3.5 wt.-%.

It is preferred that the polymeric part of the first polypropylene composition (PC1) has an intrinsic viscosity of the crystalline fraction (iV(CF)), determined by CRYSTEX analysis, in the range from 1.00 to 3.00 dL/g, more preferably in the range from 1.30 to 220 dL/g, most preferably in the range from 1.50 to 1.75 dL/g.

It is also preferred that the ratio of the intrinsic viscosity of the soluble and crystalline fractions, (iV(SF)/iV(CF)), determined by CRYSTEX analysis, is in the range from 0.60 to 1.20, more preferably in the range from 0.70 to 1.10, most preferably in the range from 0.80 to 1.00.

It is preferred that the polymeric part of the first polypropylene composition (PC1) has an ethylene content (C2(total)), determined by CRYSTEX analysis, in the range from 4.0 to 10.0 wt.-%, more preferably in the range from 5.0 to 8.5 wt.-%, most preferably in the range from 6.0 to 7.0 wt.-%.

The individual components will now be described in more detail.

**The random-heterophasic propylene-ethylene copolymer (RAHECO)**

The random-heterophasic propylene-ethylene copolymer (RAHECO) is present in an amount in the range from 20.0 to 80.0 wt.-%, more preferably in the range from 35.0 to 70.0 wt.-%, most preferably in the range from 50.0 to 65.0 wt.-%, relative to the total weight of the first polypropylene composition (PC1).

The random-heterophasic propylene-ethylene copolymer (RAHECO) comprises:

a) a crystalline matrix (M) being a propylene-ethylene random copolymer; and

b) an amorphous propylene-ethylene elastomer (E).

The random-heterophasic propylene-ethylene copolymer (RAHECO) has a melt flow rate ($MFR_2$), determined according to ISO 1133 at 230 °C and 2.16 kg, in the range from 0.5 to 10.0 g/10 min, more preferably in the range from 0.7 to 7.0 g/10 min, most preferably in the range from 1.0 to 5.0 g/10 min.

The random-heterophasic propylene-ethylene copolymer (RAHECO) preferably has a melting temperature (Tm), determined by differential scanning calorimetry (DSC) according to ISO 11357 / part 3 /method C2, in the range from 125 to 165 °C, more preferably in the range from 140 to 160 °C, most preferably in the range from 150 to 155 °C.

The random-heterophasic propylene-ethylene copolymer (RAHECO) preferably has a crystallization temperature (Tc), determined by differential scanning calorimetry (DSC) according to ISO 11357 / part 3 /method C2, in the range from 70 to 121 °C, more preferably in the range from 90 to 110 °C, most preferably in the range from 95 to 105 °C.

The crystalline matrix (M) of the random-heterophasic propylene-ethylene copolymer (RAHECO) preferably has a content of 2,1-regiodefects, as determined by $^{13}$C-NMR spectroscopy, in the range from 0.00 to 0.20 mol-%, more preferably in the range from 0.00 to 0.10 mol-%, most preferably the crystalline matrix (M) of the random-heterophasic propylene-ethylene copolymer (RAHECO) is free from 2,1-regiodefects, as determined by $^{13}$C-NMR spectroscopy.

Being free of 2,1-regiodefects is an indication that the random-heterophasic propylene-ethylene copolymer (RAHECO) has been polymerized in the presence of a Ziegler-Natta catalyst.

Therefore, it is further preferred that the random-heterophasic propylene-ethylene copolymer (RAHECO) has been polymerized in the presence of a Ziegler-Natta catalyst.

The random-heterophasic propylene-ethylene copolymer (RAHECO) has a soluble fraction (SF) content, determined according to CRYSTEX analysis, in the range from 20 to 50 wt.-%, more preferably in the range from 25 to 45 wt.-%, most preferably in the range from 30 to 40 wt.-%.

The random-heterophasic propylene-ethylene copolymer (RAHECO) has an ethylene content of the soluble fraction (C2(SF)), determined by CRYSTEX analysis, in the range from 15.0 to 35.0 wt.-%, more preferably in the range from 20.0 to 32.0 wt.-%, most preferably in the range from 23.0 to 30.0 wt.-%.

The random-heterophasic propylene-ethylene copolymer (RAHECO) preferably has an intrinsic viscosity of the soluble fraction (iV(SF)), determined by CRYSTEX analysis, in the range from 1.60 to 3.50 dL/g, more preferably in the range from 1.90 to 3.20 dL/g, most preferably in the range from 220 to 3.00 dL/g.

The random-heterophasic propylene-ethylene copolymer (RAHECO) has a crystalline fraction (CF) content, determined by CRYSTEX analysis, in the range from 50 to 80 wt.-%, more preferably in the range from 55 to 75 wt.-%, most preferably in the range from 60 to 70 wt.-%.

The random-heterophasic propylene-ethylene copolymer (RAHECO) preferably has an ethylene content of the crystalline fraction (C2(CF)), determined by CRYSTEX analysis, in the range from 1.0 to 10.0 wt.-%, more preferably in the range from 2.5 to 8.0 wt.-%, most preferably in the range from 4.0 to 6.0 wt.-%.

The random-heterophasic propylene-ethylene copolymer (RAHECO) preferably has an intrinsic viscosity of the crystalline fraction (iV(CF)), determined by CRYSTEX analysis, in the range from 1.00 to 3.00 dL/g, more preferably in the range from 1.50 to 2.90 dL/g, most preferably in the range from 2.00 to 2.80 dL/g.

It is also preferred that the ratio of the intrinsic viscosity of the soluble and crystalline fractions, (iV(SF)/iV(CF)), determined by CRYSTEX analysis, is in the range from 0.60 to 2.00, more preferably in the range from 0.70 to 1.60, most preferably in the range from 0.80 to 1.20.

The random-heterophasic propylene-ethylene copolymer (RAHECO) preferably has an ethylene content (C2(total)), determined by CRYSTEX analysis, in the range from 9.0 to 16.0 wt.-%, more preferably in the range from 10.0 to 15.0 wt.-%, most preferably in the range from 11.0 to 14.0 wt.-%.

**Propylene homopolymer (h-PP)**

The propylene homopolymer (h-PP) is present in the first polypropylene composition (PC1) in an amount in the range from 20.0 to 80.0 wt.-%, more preferably from 30.0 to 65.0 wt.-%, most preferably from 35.0 to 50.0 wt.-%, relative to the total weight of the first polypropylene composition (PC 1).

The propylene homopolymer (h-PP) preferably has a melt flow rate ($MFR_2$), determined according to ISO 1133 at 230 °C and 2.16 kg, in the range from 1.0 to 50.0 g/10 min, more preferably in the range from 3.0 to 35.0 g/10 min, most preferably in the range from 5.0 to 25.0 g/10 min.

The propylene homopolymer (h-PP) preferably has a xylene cold soluble (XCS) content, determined according to ISO 16152, in the range from 0.5 to 5.0 wt.-%, more preferably in the range from 1.0 to 4.0 wt.-%, most preferably in the range from 1.2 to 3.0 wt.-%.

The propylene homopolymer (h-PP) preferably has a melting temperature (Tm), determined by differential scanning calorimetry (DSC) according to ISO 11357 / part 3 /method C2, in the range from 155 to 172 °C, more preferably in the range from 158 to 169 °C, most preferably in the range from 160 to 166 °C.

The propylene homopolymer (h-PP) preferably has a crystallization temperature (Tc), determined by differential scanning calorimetry (DSC) according to ISO 11357 / part 3 /method C2, in the range from 100 to 130 °C, more preferably in the range from 105 to 125 °C, most preferably in the range from 110 to 120 °C.

The propylene homopolymer (h-PP) preferably has an isotactic pentad [mmmm] concentration, as determined by $^{13}$C-NMR spectroscopy, in the range from 92.0 to 99.0%, more preferably in the range from 93.0 to 98.0%, most preferably in the range from 94.0 to 97.0%.

The propylene homopolymer (h-PP) preferably has a content of 2,1-regiodefects, as determined by $^{13}$C-NMR spectroscopy, in the range from 0.00 to 0.20 mol-%, more preferably in the range from 0.00 to 0.10 mol-%, most preferably the propylene homopolymer (h-PP) is free from 2,1-regiodefects, as determined by $^{13}$C-NMR spectroscopy.

Being free of 2,1-regiodefects is an indication that the propylene homopolymer (h-PP) has been polymerized in the presence of a Ziegler-Natta catalyst.

Therefore, it is further preferred that the propylene homopolymer (h-PP) has been polymerized in the presence of a Ziegler-Natta catalyst.

**Skin layer**

The skin layer (A) comprises at least 90 wt.-%, more preferably at least 95 wt.-%, most preferably at least 97 wt.-%, based on the total weight of the skin layer, of a polypropylene or mixture of polypropylenes.

It is preferred that the skin layer (A) comprises from 80 to 100 wt.-%, more preferably from 90 to 100 wt.-%, most preferably at least from 95 to 100 wt.-%, based on the total weight of the skin layer, of a first propylene-ethylene random copolymer (R-PP1).

As would be understood by the person skilled in the art, in contrast to the random heterophasic propylene-ethylene copolymer (RAHECO), the first propylene-ethylene random copolymer (R-PP1) is monophasic.

It is thus preferred that the first propylene-ethylene random copolymer (R-PP1) has only one glass transition temperature (Tg).

The first propylene-ethylene random copolymer (R-PP1) is a random copolymer with propylene monomer units and ethylene comonomer units.

The first propylene-ethylene random copolymer (R-PP1) preferably has a melt flow rate (MFR$_2$), determined according to ISO 1133 at 230 °C and 2.16 kg, in the range from 2.0 to 20.0 g/10 min, more preferably in the range from 4.0 to 15.0 g/10 min, most preferably in the range from 6.0 to 10.0 g/10 min.

The first propylene-ethylene random copolymer (R-PP1) preferably has an ethylene content (C2), determined by quantitative $^{13}$C-NMR spectroscopy, in the range from 1.0 to 5.0 wt.-%, more preferably in the range from 1.5 to 4.0 wt.-%, most preferably in the range from 2.0 to 3.5 wt.-%.

The first propylene-ethylene random copolymer (R-PP1) preferably has a xylene cold soluble (XCS) content, determined according to ISO 16152, in the range from 1.0 to 5.0 wt.-%, more preferably in the range from 2.0 to 4.5 wt.-%, most preferably in the range from 3.0 to 4.2 wt.-%.

The first propylene-ethylene random copolymer (R-PP1) preferably has a melting temperature (Tm), determined by differential scanning calorimetry (DSC) according to ISO 11357 / part 3 /method C2, in the range from 130 to 162 °C, more preferably in the range from 140 to 159 °C, most preferably in the range from 150 to 156 °C.

The first propylene-ethylene random copolymer (R-PP1) preferably has a crystallization temperature (Tc), determined by differential scanning calorimetry (DSC) according to ISO 11357 / part 3 /method C2, in the range from 90 to 115 °C, more preferably in the range from 95 to 111 °C, most preferably in the range from 100 to 108 °C.

The first propylene-ethylene random copolymer (R-PP1) preferably has a content of 2,1-regiodefects, as determined by $^{13}$C-NMR spectroscopy, in the range from 0.00 to 0.20 mol-%, more preferably in the range from 0.00 to 0.10 mol-%, most preferably the third propylene-ethylene random copolymer (R-PP3) is free from 2,1-regiodefects, as determined by $^{13}$C-NMR spectroscopy.

Being free of 2,1-regiodefects is an indication that the first propylene-ethylene random copolymer (R-PP1) has been polymerized in the presence of a Ziegler-Natta catalyst.

Therefore, it is further preferred that the first propylene-ethylene random copolymer (R-PP1) has been polymerized in the presence of a Ziegler-Natta catalyst.

If components other than the first propylene-ethylene random copolymer (R-PP1) are present in the skin layer, then it is preferred that these further components are additives.

The skilled practitioner would be able to select suitable additives that are well known in the art.

The additives are preferably selected from pigments, antioxidants, UV-stabilizers, nucleating agents, mold release agents, acid scavengers, lubricants, anti-static agents, and mixtures thereof.

It is understood that the content of additives includes any carrier polymers used to introduce the additives to the composition of the skin layer, i.e. masterbatch carrier polymers. An example of such a carrier polymer would be a polypropylene homopolymer in the form of powder.

**Sealing layer**

The sealing layer (C) comprises at least 90 wt.-%, more preferably at least 95 wt.-%, most preferably at least 97 wt.-%, based on the total weight of the sealing layer, of a polypropylene or mixture of polypropylenes.

It is preferred that the sealing layer (C) comprises from 80 to 100 wt.-%, more preferably from 90 to 100 wt.-%, most preferably at least from 95 to 100 wt.-%, based on the total weight of the sealing layer, of a second propylene-ethylene random copolymer (R-PP2).

As would be understood by the person skilled in the art, in contrast to the random heterophasic propylene-ethylene copolymer (RAHECO), the second propylene-ethylene random copolymer (R-PP2) is monophasic.

It is thus preferred that the second propylene-ethylene random copolymer (R-PP2) has only one glass transition temperature (Tg).

The second propylene-ethylene random copolymer (R-PP2) is a random copolymer with propylene monomer units and ethylene comonomer units.

The second propylene-ethylene random copolymer (R-PP2) may be the same as or different to the first propylene-ethylene random copolymer (R-PP1).

The second propylene-ethylene random copolymer (R-PP2) preferably has a melt flow rate ($MFR_2$), determined according to ISO 1133 at 230 °C and 2.16 kg, in the range from 2.0 to 20.0 g/10 min, more preferably in the range from 4.0 to 15.0 g/10 min, most preferably in the range from 6.0 to 12.0 g/10 min.

The second propylene-ethylene random copolymer (R-PP2) preferably has an ethylene content (C2), determined by quantitative $^{13}$C-NMR spectroscopy, in the range from 1.0 to 5.0 wt.-%, more preferably in the range from 2.0 to 4.0 wt.-%, most preferably in the range from 2.5 to 3.5 wt.-%.

The second propylene-ethylene random copolymer (R-PP2) preferably has a xylene cold soluble (XCS) content, determined according to ISO 16152, in the range from 1.0 to 5.0 wt.-%, more preferably in the range from 2.5 to 4.7 wt.-%, most preferably in the range from 3.5 to 4.5 wt.-%.

The second propylene-ethylene random copolymer (R-PP2) preferably has a melting temperature (Tm), determined by differential scanning calorimetry (DSC) according to ISO 11357 / part 3 /method C2, in the range from 130 to 162 °C, more preferably in the range from 140 to 157 °C, most preferably in the range from 147 to 153 °C.

The second propylene-ethylene random copolymer (R-PP2) preferably has a crystallization temperature (Tc), determined by differential scanning calorimetry (DSC) according to ISO 11357 part 3 /method C2, in the range from 90 to 115 °C, more preferably in the range from 95 to 111 °C, most preferably in the range from 100 to 108 °C.

The second propylene-ethylene random copolymer (R-PP2) preferably has a content of 2,1-regiodefects, as determined by $^{13}$C-NMR spectroscopy, in the range from 0.00 to 0.20 mol-%, more preferably in the range from 0.00 to 0.10 mol-%, most preferably the third propylene-ethylene random copolymer (R-PP3) is free from 2,1-regiodefects, as determined by $^{13}$C-NMR spectroscopy.

Being free of 2,1-regiodefects is an indication that the second propylene-ethylene random copolymer (R-PP2) has been polymerized in the presence of a Ziegler-Natta catalyst.

Therefore, it is further preferred that the second propylene-ethylene random copolymer (R-PP2) has been polymerized in the presence of a Ziegler-Natta catalyst.

If components other than the second propylene-ethylene random copolymer (R-PP2) are present in the skin layer, then it is preferred that these further components are additives.

The skilled practitioner would be able to select suitable additives that are well known in the art.

The additives are preferably selected from pigments, antioxidants, UV-stabilizers, nucleating agents, mold release agents, acid scavengers, lubricants, anti-static agents, and mixtures thereof.

It is understood that the content of additives includes any carrier polymers used to introduce the additives to the composition of the skin layer, i.e. masterbatch carrier polymers. An example of such a carrier polymer would be a polypropylene homopolymer in the form of powder.

**Multilayer film**

As described above, the polypropylene-based multilayer film (F) comprises, in the given order, the following layers:

(A) a skin layer;
(B) a core layer; and
(C) a sealing layer.

Although other layers may be present, it is preferred that any further layers, if present, are between the skin layer (A) and the core layer (B) or between the core layer (B) and between the sealing layer (C), most preferably between the skin layer (A) and the core layer (B).

It is particularly preferred that no further layers are present, i.e. that the polypropylene-based multilayer film (F) is a 3-layer film, consisting of layers (A), (B) and (C).

It is preferred that the polypropylene-based multilayer film (F) has a thickness in the range from 20 to 250 $\mu$m, more preferably 40 to 200 $\mu$m, most preferably 50 to 150 $\mu$m.

It is preferred that:

a) the skin layer has a thickness in the range from 5 to 30% of the total thickness of the polypropylene-based multilayer film (F);
b) the core layer has a thickness in the range from 20 to 93% of the total thickness of the polypropylene-based multilayer film (F); and
c) the sealing layer has a thickness in the range from 2 to 30% of the total thickness of the polypropylene-based multilayer film (F).

It is further preferred that:

a) the skin layer has a thickness in the range from 10 to 25% of the total thickness of the polypropylene-based multilayer film (F);
b) the core layer has a thickness in the range from 50 to 84% of the total thickness of the polypropylene-based multilayer film (F); and
c) the sealing layer has a thickness in the range from 6 to 25% of the total thickness of the polypropylene-based multilayer film (F).

It is particularly preferred that:

a) the skin layer has a thickness in the range from 12 to 20% of the total thickness of the polypropylene-based multilayer film (F);
b) the core layer has a thickness in the range from 60 to 76% of the total thickness of the polypropylene-based multilayer film (F); and
c) the sealing layer has a thickness in the range from 12 to 20% of the total thickness of the polypropylene-based multilayer film (F).

It is preferred that the polymeric part of the polypropylene-based multilayer film (F) has a soluble fraction (SF) content, determined according to CRYSTEX analysis, in the range from 9 to 30 wt.-%, more preferably in the range from 11 to 23 wt.-%, yet more preferably in the range from 12 to 18 wt.-%, most preferably in the range from 13 to 16 wt.-%.

It is preferred that the polymeric part of the polypropylene-based multilayer film (F) has an ethylene content of the soluble fraction (C2(SF)), determined by CRYSTEX analysis, in the range from 15.0 to 35.0 wt.-%, more preferably in the range from 20.0 to 32.0 wt.-%, most preferably in the range from 22.0 to 30.0 wt.-%.

It is preferred that the polymeric part of the polypropylene-based multilayer film (F) has an intrinsic viscosity of the soluble fraction (iV(SF)), determined by CRYSTEX analysis, in the range from 120 to 3.50 dL/g, more preferably in the range from 1.40 to 2.40 dL/g, most preferably in the range from 1.60 to 2.20 dL/g.

It is preferred that the polymeric part of the polypropylene-based multilayer film (F) has a crystalline fraction (CF) content, determined by CRYSTEX analysis, in the range from 70 to 90 wt.-%, more preferably in the range from 77 to 89 wt.-%, yet more preferably in the range from 82 to 88 wt.-%, most preferably in the range from 84 to 87 wt.-%.

It is preferred that the polymeric part of the polypropylene-based multilayer film (F) has an ethylene content of the crystalline fraction (C2(CF)), determined by CRYSTEX analysis, in the range from 1.0 to 6.0 wt.-%, more preferably in the range from 1.5 to 4.5 wt.-%, most preferably in the range from 2.0 to 3.0 wt.-%.

It is preferred that the polymeric part of the polypropylene-based multilayer film (F) has an intrinsic viscosity of the crystalline fraction (iV(CF)), determined by CRYSTEX analysis, in the range from 1.50 to 3.00 dL/g, more preferably in the range from 1.60 to 2.50 dL/g, most preferably in the range from 1.70 to 2.30 dL/g.

It is also preferred that the ratio of the intrinsic viscosity of the soluble and crystalline fractions, (iV(SF)/iV(CF)), determined by CRYSTEX analysis, is in the range from 0.60 to 1.50, more preferably in the range from 0.70 to 1.30, most preferably in the range from 0.80 to 1.10.

It is preferred that the polymeric part of the polypropylene-based multilayer film (F) has an ethylene content (C2(total)), determined by CRYSTEX analysis, in the range from 3.0 to 10.0 wt.-%, more preferably in the range from 4.0 to 8.0 wt.-%, yet more preferably in the range from 4.5 to 7.0 wt.-%, most preferably in the range from 5.0 to 6.0 wt.-%.

It is preferred that the polymeric part of the polypropylene-based multilayer film (F) has an intrinsic viscosity (iV(total)), determined by CRYSTEX analysis, in the range from 1.00 to 2.80 dL/g, more preferably in the range from 1.30 to 2.40 dL/g, most preferably in the range from 1.60 to 2.10 dL/g.

It is preferred that the polypropylene-based multilayer film (F) has a tensile modulus in the machine direction (TM-MD), measured according to ISO 527-3, in the range from 300 to 1000 MPa, more preferably in the range from 400 to 850 MPa, most preferably in the range from 450 to 700 MPa.

It is preferred that the polypropylene-based multilayer film (F) has a tensile modulus in the transverse direction (TM-TD), measured according to ISO 527-3, in the range from 300 to 1000 MPa, more preferably in the range from 400 to 850 MPa, most preferably in the range from 450 to 700 MPa.

It is preferred that the polypropylene-based multilayer film (F) has a tensile strength in the machine direction (TS-MD), measured according to ISO 527-3, in the range from 25 to 100 MPa, more preferably in the range from 30 to 80 MPa, most preferably in the range from 35 to 60 MPa.

It is preferred that the polypropylene-based multilayer film (F) has a tensile strength in the transverse direction (TS-TD), measured according to ISO 527-3, in the range from 20 to 100 MPa, more preferably in the range from 25 to 80 MPa, most preferably in the range from 30 to 50 MPa.

It is preferred that the polypropylene-based multilayer film (F) has an elongation at break in the machine direction (EB-MD), measured according to ISO 527-3, in the range from 300 to 1000%, more preferably in the range from 400 to 850%, most preferably in the range from 500 to 700%.

It is preferred that the polypropylene-based multilayer film (F) has elongation at break in the transverse direction (EB-TD), measured according to ISO 527-3, in the range from 300 to 1000%, more preferably in the range from 450 to 900%, most preferably in the range from 600 to 800%.

It is preferred that the polypropylene-based multilayer film (F) has a haze value, determined according to ASTM D1003, in the range from 0 to 10.0%, more preferably in the range from 0 to 4.0%, yet more preferably in the range from 0 to 2.0%, most preferably in the range from 0 to 1.0%.

It is preferred that the polypropylene-based multilayer film (F) has a clarity value, determined according to ASTM D1003, in the range from 90.0 to 100.0%, more preferably in the range from 95.0 to 10.00%, most preferably in the range from 97.5 to 100.0%.

It is preferred that the polypropylene-based multilayer film (F) has a total luminous transmittance, determined according to ASTM D1003, in the range from 80 to 100%, more preferably in the range from 85 to 100%, most preferably in the range from 90 to 100%.

It is preferred that the polypropylene-based multilayer film (F) has a total diffuse transmittance, determined according to ASTM D1003, in the range from 0 to 10.0%, more preferably in the range from 0 to 2.0%, most preferably in the range from 0 to 1.0%.

It is preferred that the polypropylene-based multilayer film (F) has a seal strength in the machine direction, determined according to the method specified in the measurement methods at a sealing temperature of 130 °C, in the range from 3.0 to 20.0 N, more preferably in the range from 4.0 to 15.0 N, most preferably in the range from 4.5 to 10.0 N.

It is preferred that the polypropylene-based multilayer film (F) has a seal strength in the machine direction, determined according to the method specified in the measurement methods at a sealing temperature of 140 °C, in the range from 28 to 100 N, more preferably in the range from 31 to 75 N, most preferably in the range from 34 to 50 N.

It is preferred that the polypropylene-based multilayer film (F) has a seal strength in the machine direction, determined according to the method specified in the measurement methods at a sealing temperature of 150 °C, in the range from 23 to 100 N, more preferably in the range from 27 to 75 N, most preferably in the range from 31 to 50 N.

**EXAMPLES**

**1. Measurement methods**

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the ethylene-propylene copolymer.

Quantitative $^{13}C\{^1H\}$ NMR spectra were recorded in the solution-state using a Broker Advance III 400 NMR spectrometer operating at 400.15 and 100.62 MHz for $^1H$ and $^{13}C$ respectively. All spectra were recorded using a $^{13}C$ optimised 10 mm extended temperature probe head at 125°C using nitrogen gas for all pneumatics.

Approximately 200 mg of material was dissolved in *1,2*-tetrachloroethane-$d_2$ (TCE-$d_2$). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

All chemical shifts are internally referenced to the methyl isotactic pentad (mmmm) at 21.85 ppm. Characteristic signals corresponding to regio-defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (mmmm \: / \: \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) \: / \: 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e] \: mol\text{-}\% = 100 * (P_{21e} \: / \: P_{total})$$

The comonomer fraction was quantified using the method of Wang et. al. (Wang, W-J., Zhu, S., Macromolecules 33 (2000), 1157) through integration of multiple signals across the whole spectral region in the $^{13}$C{$^1$H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \, [\text{mol-}\%] = 100 * f_E$$

The weight percent comonomer incorporation was calculated from the mole fraction:

$$E \, [\text{wt.-}\%] = 100 * (f_E * 28.06) / ((f_E * 28.06) + ((1-f_E) * 42.08))$$

**CRYSTEX analysis**

*Crystalline and soluble fractions method*

The crystalline (CF) and soluble fractions (SF) of the heterophasic polypropylene-ethylene copolymers (HECO) and random heterophasic polypropylene-ethylene copolymers (RAHECO) as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH$_3$ stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b*Abs(CH) + c*(Abs(CH))^2 + d*Abs(CH_3) + e*(Abs(CH_3))^2 + f*Abs(CH)*Abs(CH_3)$$

$$(\text{Equation 1})$$

$$CH_3/1000C = a + b*Abs(CH) + c*Abs(CH_3) + d*(Abs(CH_3)/Abs(CH)) + e*(Abs(CH_3)/Abs(CH))^2$$

$$(\text{Equation 2})$$

The constants a to e for equation 1 and a to f for equation 2 were determined by using least square regression analysis.

The $CH_3/1000C$ is converted to the ethylene content in wt.-% using following relationship:

$$\text{Wt.-\% (Ethylene in EP Copolymers)} = 100 - CH_3/1000TC * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{Wt.-\% XS} = 1.01 * \text{Wt.-\% SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$\text{IV (dL/g)} = a * \text{Vsp/c} \qquad \text{(equation 5)}$$

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**The xylene soluble fraction at room temperature (XCS, wt.-%):** The amount of the polymer soluble in xylene was determined at 25 °C according to ISO 16152; 5th edition; 2005-07-01.

**The Flexural Modulus** was determined according to ISO 178 method A (3-point bending test) on 80 mm $\times$ 10 mm $\times$ 4 mm specimens. Following the standard, a test speed of 2 mm/min and a span length of 16 times the thickness was used. The testing temperature was 23$\pm$2 ° C. Injection molding was carried out according to ISO 19069-2 using a melt temperature of 230 °C for all materials irrespective of material melt flow rate.

**DSC analysis, melting temperature ($T_m$) and crystallization temperature ($T_c$):** measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. Crystallization temperature ($T_c$) was determined from the cooling step, while melting temperature ($T_m$) was determined from the second heating step.

**Optical properties (haze, clarity, total luminous transmittance, total diffuse transmittance)**

The optical properties were determined according to ASTM D1003-00 directly on the multilayer film produced in the experimental section.

**Seal Strength**

The heat-seal experiments were performed on at least 3 film specimens of 85 mm wide by 200 mm length cut in the machine direction. The 20 mm × 150 mm Teflon coated steel heating bars were set to a temperature of 130, 140 or 150 (as specified in the experimental section) °C. Two films were sealed by positioning, one on top of the other using a 0.5 s sealing time and 0.30 N/ mm² pressure. The resulting sealed area was 85 mm × 20 mm. The specimens were then conditioned for 7 days (± 24 h) at 23 °C (± 2 °C) / 50 % RH (± 10%). 10 specimens of 15 mm width were cut and tested in tensile mode at 23 °C (± 2 °C) / 50 % RH (± 10%) on a Universal Testing Machine (Zwick Z005). The clamping distance used was 100 mm, and a test speed of 100 mm/min. The yielding force and maximum force were measured for each test specimen.

Basic sealing:

- Film width: 85 mm
- Film length: > 200 mm
- Sealed seam width: 20 mm
- Sealing temperature: 130°C, 140 °C or 150 °C
- Sealing pressure: 0.30 N/mm²
- Sealing time: 0.5 s
- Sealing jaws: Teflon coated

Conditioning

- Conditioning time: 7 days (± 24 h) at 23 °C (± 2 °C) / 50 % RH (± 10%)

Heat seal strength:

- Test temperature: 23 °C (± 2 °C) / 50 % RH (± 10%)
- Specimen width: 15 mm
- Gripping distance: 100 mm
- Test speed: 100 mm/min
- Test device: Universal Testing Machine

**Tensile properties (Tensile Modulus, Tensile Strength, Elongation at Break)**

Tensile properties in machine and transverse direction were determined according to ISO 527-3 at 23 °C on the multilayer films produced in the experimental section. Testing was performed at a crosshead speed of 1 mm/min.

**2. Examples**

**2.1 Synthesis of (random) heterophasic propylene-ethylene copolymers (RAHECO, HECO1 and HECO2)**

For the polymerization process of RAHECO, HECO 1 and HECO2, a Ziegler-Natta type catalyst as used in for the inventive examples of WO2016/066446 A1 was employed (without any vinylcyclohexane prepolymerization).

The catalyst systems defined above were used in combination with triethyl-aluminium (TEAL) as co-catalyst and dicyclopentadienyl-dimethoxy silane (Donor D) as external donor.

The subsequent polymerizations have been effected under the following conditions.

**Table 1** Polymerization conditions for the heterophasic propylene-ethylene copolymers

|  |  | RAHECO | HECO1 | HECO2 |
|---|---|---|---|---|
| **Prepolymerization** |  |  |  |  |
| [Co]/[ED] | [mol/mol] | 10 | 8 | 5.9 |
| [Co]/[Ti] | [mol/mol] | 220 | 280 | 200 |
| Temperature | [°C] | 25 | 25 | 30 |
| Residence time | [min] | 10 | 20 | 5 |

(continued)

| Loop reactor | | | | |
|---|---|---|---|---|
| Temperature | [°C] | 70 | 75 | 80 |
| Split | [wt.-%] | 35 | 45 | 36 |
| H2/C3 | [mol/kmol] | 1.5 | 0.25 | 7.2 |
| C2/C3 | [mol/kmol] | 5.0 | 0 | 0 |
| $MFR_2$ | [g/10 min] | 6.0 | 0.60 | 23 |
| C2 | [wt.-%] | 2.0 | 0.0 | 0.0 |
| **1st Gas phase reactor** | | | | |
| Temperature | [°C] | 75 | 80 | 80 |
| Split | [wt.-%] | 46 | 40 | 38 |
| H2/C3 | [mol/kmol] | 1.5 | 3.7 | 18.6 |
| C2/C3 | [mol/kmol] | 58 | 0 | 0 |
| $MFR_2$ | [g/10 min] | 1.7 | 0.60 | 23 |
| XCS | [wt.-%] | 22.0 | 1.5 | 1.8 |
| C2 | [wt.-%] | 6.5 | 0.0 | 0.0 |
| **2nd Gas phase reactor** | | | | |
| Temperature | [°C] | 80 | 75 | 80 |
| Split | [wt.-%] | 19 | 14 | 14 |
| H2/C3 | [mol/kmol] | 185 | 425 | 102 |
| C2/C3 | [mol/kmol] | 416 | 858 | 955 |
| $MFR_2$ | [g/10 min] | 1.5 | 0.50 | 11 |
| **3rd Gas phase reactor** | | | | |
| Temperature | [°C] | - | - | 85 |
| Split | [wt.-%] | 0 | 0 | 13 |
| H2/C3 | [mol/kmol] | - | - | 104 |
| C2/C3 | [mol/kmol] | - | - | 968 |
| $MFR_2$ | [g/10 min] | - | - | 7 |
| **Final Properties (pellet)** | | | | |
| $MFR_2$ | [g/10 min] | 1.5 | 1.2 | 7 |
| C2 | [wt.-%] | 12.7 | 7.9 | 17 |
| SF | [wt.-%] | 35.7 | 15.4 | 26.2 |
| C2(SF) | [wt.-%] | 27.2 | 41.5 | 10.7 |
| iV(SF) | [dL/g] | 2.60 | 1.80 | 3.6 |
| CF | [wt.-%] | 64.3 | 84.6 | 73.8 |
| C2(CF) | [wt.-%] | 5.2 | 1.8 | 4.5 |
| iV(CF) | [dL/g] | 2.70 | 3.20 | 1.8 |
| iV(SF)/iV(CF) | [-] | 0.96 | 0.56 | 2.00 |
| Tm | [°C] | 152 | 164 | 165 |
| Tc | [°C] | 100 | 116 | 116 |
| Flexural Modulus | [MPa] | 330 | 1100 | 970 |

The matrices of each of RAHECO, HECO1 and HECO2 are free from 2,1-regiodefects.

RAHECO was compounded in a co-rotating twin-screw extruder Coperion ZSK 47 at 220 °C with 0.19 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (available from Faci, Italy; CAS-no.1592-23-0).

HECO1 was compounded and visbroken in a co-rotating twin-screw extruder Coperion ZSK 47 at 220 °C with 0.15 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (available from Faci, Italy; CAS-no.1592-23-0); and an appropriate amount (i.e. enough to achieve the target $MFR_2$ of 1.2 g/10 min) of peroxide 2,5-Bis(tert.-butylperoxy)-2,5-dimethylhexane (available as Luperox 101 from Arkema, France; CAS-No. 78-63-7).

HECO2 was compounded in a co-rotating twin-screw extruder Coperion ZSK 47 at 220 °C with 0.15 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4) and 0.03 wt.-% of Ca-stearate (available from Faci, Italy; CAS-no.1592-23-0).

### 2.2 Propylene homopolymers (h-PP1 and h-PP2) and propylene-ethylene random copolymers (R-PP1, R-PP2)

h-PP1 is the commercially available grade HF420FB (Borealis AG, Austria) and has an $MFR_2$ of 20 g/10 min, an XCS content of 2.5 wt.-%, a Tm of 162 °C, a Tc of 111 °C, a 2,1-regiodefect content of 0.0 mol-% (i.e. is ZN-catalyzed), an isotacticity of 95.2%, and a Flexural Modulus of 1250 MPa.

h-PP2 is the commercially available grade HD204CF (Borealis AG, Austria) and has an $MFR_2$ of 8 g/10 min, an XCS content of 1.8 wt.-%, a Tm of 164 °C, a Tc of 117 °C, a 2,1-regiodefect content of 0.0 mol-% (i.e. is ZN-catalyzed), an isotacticity of 96.1%, and a Flexural Modulus of 1350 MPa.

The catalyst used in the polymerization process for the propylene-ethylene random copolymers R-PP1 and R-PP2, was a Ziegler-Natta type catalyst as used in for the inventive examples of WO 2016/066446 A1 (without any vinylcyclohexane prepolymerization).

The catalyst system was used in combination with triethyl-aluminium (TEAL) as co-catalyst and dicyclopentadienyl-dimethoxysilane (Donor D) as external donor.

The subsequent polymerizations have been effected under the following conditions.

**Table 2** Polymerization conditions for the propylene-ethylene random copolymers

|  |  | R-PP1 | R-PP2 |
|---|---|---|---|
| **Prepolymerization** |  |  |  |
| [Co]/[ED] | [mol/mol] | 10 | 8 |
| [Co]/[Ti] | [mol/mol] | 70 | 60 |
| Temperature | [°C] | 25 | 25 |
| Residence time | [min] | 5 | 5 |
| **Loop reactor** |  |  |  |
| Temperature | [°C] | 70 | 70 |
| Feed H2/C2 ratio | [mol/kmol] | 0.39 | 0.52 |
| Feed C2/C3 ratio | [mol/kmol] | 3.4 | 3.6 |
| Split | [wt.-%] | 48 | 45 |
| $MFR_2$ | [g/10 min] | 1.9 | 2.2 |
| C2 content | [wt.-%] | 2.8 | 2.9 |
| **First GPR** |  |  |  |
| Temperature | [°C] | 85 | 85 |
| H2/C3 ratio | [mol/kmol] | 4.4 | 5.3 |
| C2/C3 ratio | [mol/kmol] | 16.2 | 16.6 |
| Split | [wt.-%] | 52 | 55 |

(continued)

| First GPR | | | |
|---|---|---|---|
| $MFR_2$ | [g/10min] | 1.9 | 2.2 |
| **Pellet** | | | |
| $MFR_2$ | [g/10min] | 8 | 8 |
| C2 total | [wt.-%] | 2.8 | 2.9 |
| XCS | [wt.-%] | 3.3 | 4.0 |
| Tm | [°C] | 153 | 150 |
| Tc | [°C] | 104 | 103 |
| 2,1-regiodefects | [mol-%] | 0 | 0 |
| Flexural Modulus | [MPa] | 1100 | 1080 |

R-PP1 was compounded and visbroken in a co-rotating twin-screw extruder Coperion ZSK 47 at 220 °C with 0.05 wt.-% of Pentaerythrityl-tetrakis(3-(3',5'-di-tert. butyl-4-hydroxyphenyl)-propionate, (available as Irganox 1010 from BASF AG, Germany; CAS-no. 6683-19-8), 0.06 wt.-% of Tris (2,4-dit-butylphenyl) phosphite, (available as Irgafos 168 from BASF AG, Germany; CAS-no. 31570-04-4), 0.03 wt.-% of synthetic hydrotalcite (available as ADK STAB HT from Adeka Corporation, Germany; CAS-no. 11097-59-9); and an appropriate amount (i.e. enough to achieve the target $MFR_2$ of 8 g/10 min) of peroxide 2,5-Bis(tert.-butylperoxy)-2,5-dimethylhexane (available as Luperox 101 from Arkema, France; CAS-No. 78-63-7).

R-PP2 was compounded and visbroken in a co-rotating twin-screw extruder Coperion ZSK 47 at 220 °C with 0.20 wt.-% of erucamide (available as Crodamide ER beads from Croda International, UK; CAS-no. 112-84-5); 0.18 wt.-% of amorphous silica (available as Sylobloc 45B from Grace GmbH, Germany; CAS-no. 7631-86-9); and 0.10 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.04 wt.-% of Ca-stearate (available from Faci, Italy; CAS-no.1592-23-0); and an appropriate amount (i.e. enough to achieve the target $MFR_2$ of 11 g/10 min) of peroxide 2,5-Bis(tert.-butylperoxy)-2,5-dimethylhexane (available as Luperox 101 from Arkema, France; CAS-No. 78-63-7).

**2.3 Compounding of Inventive and Comparative Multilayer films**

The compositions for each layer were pre-mixed as dry blends of pellets according to the recipes given in Table 3.
Various properties of the compositions of layer (B) (as produced by compounding in a co-rotating twin-screw extruder Coperion ZSK 47 at 220 °C) for each film and of the multilayer films themselves (as produced below) were also determined, with the data presented in Table 4.
3-layer films were produced on a SML multilayer cast-film line with three extruders and a multilayer die head, using a melt temperature of 210 °C for all layers and a chill roll temperature of 15 °C. The die width is 1200 mm, and die lip thickness was set at 0.8 mm, adjusting the chill roll speed to achieve a film thickness of 80 μm. The film thickness distribution is skin 15%, core 70%, and sealing 15%.
The performance properties of the inventive and comparative films are given in Table 5.

**Table 3** Recipes for inventive and comparative examples

| | | | CE1 | CE2 | IE1 | IE2 |
|---|---|---|---|---|---|---|
| Skin layer | R-PP1 | [wt.-%] | 100 | 100 | 100 | 100 |
| Core layer | HECO1 | [wt.-%] | 100 | 30 | - | - |
| | HECO2 | [wt.-%] | - | 70 | - | - |
| | RAHECO | [wt.-%] | - | - | 55 | 55 |
| | h-PP1 | [wt.-%] | - | - | 45 | - |
| | h-PP2 | [wt.-%] | - | - | - | 45 |
| Sealing layer | R-PP2 | [wt.-%] | 100 | 100 | 100 | 100 |

**Table 4** Compositional properties of the inventive and comparative multilayer films

|  |  | CE1 | CE2 | IE1 | IE2 |
|---|---|---|---|---|---|
| **Layer (B)** |  |  |  |  |  |
| MFR$_2$ | [g/10 min] | 1.2 | 7.5 | 15.6 | 10.4 |
| C2 | [wt.-%] | 7.9 | 14.2 | 6.9 | 6.6 |
| SF | [wt.-%] | 15.4 | 24.2 | 17.3 | 17.1 |
| C2(SF) | [wt.-%] | 41.5 | 41.3 | 26.8 | 27.1 |
| iV(SF) | [dL/g] | 1.8 | 2.14 | 1.51 | 1.56 |
| CF | [wt.-%] | 84.6 | 75.8 | 82.7 | 82.9 |
| C2(CF) | [wt.-%] | 1.8 | 5.3 | 2.67 | 2.6 |
| iV(CF) | [dL/g] | 3.20 | 1.81 | 1.63 | 1.71 |
| iV(SF)/iV(CF) | [-] | 0.56 | 1.18 | 0.93 | 0.91 |
| Tm | [°C] | 164 | 164 | 164 | 164 |
| Tc | [°C] | 110 | 120 | 111 | 113 |
| **Multilayer films (F)** |  |  |  |  |  |
| C2 | [wt.-%] | 6.7 | 11.2 | 5.6 | 5.7 |
| SF | [wt.-%] | 12.7 | 19.2 | 14.3 | 14.3 |
| C2(SF) | [wt.-%] | 36.8 | 39.5 | 25.0 | 24.9 |
| iV(SF) | [dL/g] | 1.42 | 2.5 | 1.71 | 1.85 |
| CF | [wt.-%] | 87.3 | 80.8 | 85.7 | 85.7 |
| C2(CF) | [wt.-%] | 2.2 | 4.4 | 2.3 | 2.6 |
| iV(CF) | [dL/g] | 2.60 | 2.07 | 1.92 | 2.07 |
| iV(SF)/iV(CF) | [-] | 0.55 | 1.21 | 0.89 | 0.89 |

**Table 5** Performance of the inventive and comparative multilayer films

|  |  | CE1 | CE2 | IE1 | IE2 |
|---|---|---|---|---|---|
| Tensile Modulus (MD) | [MPa] | 662 | 618 | 510 | 508 |
| Tensile Modulus (TD) | [MPa] | 634 | 560 | 492 | 482 |
| Tensile Strength (MD) | [MPa] | 54.4 | 50.9 | 39.6 | 47.1 |
| Tensile Strength (TD) | [MPa] | 38.1 | 32.2 | 33.2 | 41.5 |
| Elongation at break (MD) | [%] | 610 | 689 | 591 | 644 |
| Elongation at break (TD) | [%] | 702 | 686 | 644.0 | 743 |
| Total luminous transmittance | [%] | 93.2 | 92.5 | 93.1 | 93.2 |
| Total diffuse transmittance | [%] | 1.62 | 2.15 | 0.34 | 0.39 |
| Haze | [%] | 1.74 | 2.33 | 0.36 | 0.42 |
| Clarity | [%] | 96.9 | 82.4 | 97.8 | 97.7 |
| Seal strength (130 °C) | [N/15mm] | 6.8 | 7.0 | 5.3 | 5.2 |
| Seal strength (140 °C) | [N/15mm] | 23.4 | 26.2 | 37.9 | 36.4 |
| Seal strength (150 °C) | [N/15mm] | 20.9 | 21.9 | 35.0 | 34.7 |

As can be seen from Table 5, the inventive multilayer film has significantly improved optical properties (especially haze and clarity), as well as improved seal strength at mid-range temperatures (140 °C and 150 °C), whilst maintaining good mechanical properties.

**Claims**

1. A polypropylene-based multilayer film (F), comprising, in the given order, the following layers:

(A) a skin layer, comprising at least 90 wt.-%, based on the total weight of the skin layer, of a polypropylene or mixture of polypropylenes;
(B) a core layer, comprising least 90 wt.-%, based on the total weight of the core layer, of a first polypropylene composition (PC1) comprising the following components:

a) from 20.0 to 80.0 wt.-%, relative to the total weight of the first polypropylene composition (PC1), of a random heterophasic propylene-ethylene copolymer (RAHECO) comprising the following components:

a1) a crystalline matrix (M) being a propylene-ethylene random copolymer; and
b1) an amorphous propylene-ethylene elastomer (E),
wherein the random heterophasic propylene-ethylene copolymer (RAHECO) has the following properties:

i) a melt flow rate ($MFR_2$), determined according to ISO 1133 at 230 °C and 2.16 kg, in the range from 0.5 to 10.0 g/10 min;
ii) a soluble fraction (SF) content in the range from 20 to 50 wt.-% and a crystalline fraction (CF) content in the range from 50 to 80 wt.-%, both determined according to CRYSTEX analysis;
iii) an ethylene content (C2(total)), determined by CRYSTEX analysis, in the range from 9.0 to 16.0 wt.-%; and
iv) an ethylene content of the soluble fraction (C2(SF)), determined by CRYSTEX analysis, in the range from 15.0 to 35.0 wt.-%, and

b) from 20.0 to 80.0 wt.-%, relative to the total weight of the first polypropylene composition (PC1), of a propylene homopolymer (h-PP),

wherein the combined amounts of the random heterophasic propylene-ethylene copolymer (RAHECO) and the propylene homopolymer (h-PP) are at least 90 wt.-%, relative to the total weight of the first polypropylene composition (PC1); and
(C) a sealing layer, comprising at least 90 wt.-%, based on the total weight of the sealing layer, of a polypropylene or mixture of polypropylenes.

2. The polypropylene-based multilayer film (F) according to claim 1, wherein the random heterophasic propylene-ethylene copolymer (RAHECO) has an ethylene content of the crystalline fraction (C2(CF)), determined by CRYSTEX analysis, in the range from 1.0 to 10.0 wt.-%.

3. The polypropylene-based multilayer film (F) according to claim 1 or claim 2, wherein the random heterophasic propylene-ethylene copolymer (RAHECO) has one or more, preferably all, of the following properties:

a) an intrinsic viscosity of the soluble fraction (iV(SF)) determined by CRYSTEX analysis, in the range from 1.60 to 3.50 dL/g;
b) an intrinsic viscosity of the crytalline fraction (iV(CF)) determined by CRYSTEX analysis, in the range from 1.00 to 3.00 dL/g;
c) an intrinsic viscosity ratio (iV(SF)/iV(CF)), determined by CRYSTEX analysis, in the range from 0.60 to 2.00.

4. The polypropylene-based multilayer film (F) according to any one of the preceding claims, wherein the random heterophasic propylene-ethylene copolymer (RAHECO) has one or more, preferably both, of the following properties:

a) a melting temperature (Tm), determined by differential scanning calorimetry (DSC) according to ISO 11357 / part 3 /method C2, in the range from 125 to 165 °C; and
b) a crystallization temperature (Tc), determined by differential scanning calorimetry (DSC) according to ISO 11357 / part 3 /method C2, in the range from 70 to 121 °C.

5. The polypropylene-based multilayer film (F) according to any one of the preceding claims, wherein the crystalline matrix (M) of the random heterophasic propylene-ethylene copolymer (RAHECO) has a content of 2,1-regiodefects, as determined by $^{13}$C-NMR spectroscopy, in the range from 0.00 to 0.20 mol-%.

6. The polypropylene-based multilayer film (F) according to any one of the preceding claims, wherein the propylene homopolymer (h-PP) has one or more, preferably all, of the following properties:

   a) a melt flow rate (MFR$_2$), determined according to ISO 1133 at 230 °C and 2.16 kg, in the range from 1.0 to 50.0 g/10 min;
   b) a xylene cold soluble (XCS) content, determined according to ISO 16152, in the range from 0.5 to 5.0 wt.-%;
   c) a melting temperature (Tm), determined by differential scanning calorimetry (DSC) according to ISO 11357 / part 3 /method C2, in the range from 155 to 172 °C;
   d) a crystallization temperature (Tc), determined by differential scanning calorimetry (DSC) according to ISO 11357 / part 3 /method C2, in the range from 100 to 130 °C;
   e) a content of 2,1-regiodefects, as determined by $^{13}$C-NMR spectroscopy, in the range from 0.00 to 0.20 mol-%; and
   f) an isotactic pentad [mmmm] concentration, as determined by $^{13}$C-NMR spectroscopy, in the range from 92.0 to 99.0%.

7. The polypropylene-based multilayer film (F) according to any one of the preceding claims, wherein the first polypropylene composition (PC1) comprises:

   a) from 35.0 to 70.0 wt.-%, more preferably 50.0 to 65.0 wt.-%, relative to the total weight of the first polypropylene composition (PC1), of the random heterophasic propylene-ethylene copolymer (RAHECO); and
   b) from 30.0 to 65.0 wt.-%, more preferably 35.0 to 50.0 wt.-%, relative to the total weight of the first polypropylene composition (PC1), of a propylene homopolymer (h-PP),

   wherein the combined amounts of the random heterophasic propylene-ethylene copolymer (RAHECO) and the propylene homopolymer (h-PP) are at least 90 wt.-%, more preferably at least 95 wt.-%, most preferably at least 98 wt.-%, relative to the total weight of the first polypropylene composition (PC1).

8. The polypropylene-based multilayer film (F) according to any one of the preceding claims, wherein the first polypropylene composition (PC1) has one or more, preferably all, of the following properties:

   a) a melt flow rate (MFR$_2$), determined according to ISO 1133 at 230 °C and 2.16 kg, in the range from 8.0 to 30.0 g/10 min;
   b) a melting temperature (Tm), determined by differential scanning calorimetry (DSC) according to ISO 11357 / part 3 /method C2, in the range from 155 to 172 °C; and
   c) a crystallization temperature (Tc), determined by differential scanning calorimetry (DSC) according to ISO 11357 / part 3 /method C2, in the range from 100 to 118 °C.

9. The polypropylene-based multilayer film (F) according to any one of the preceding claims, wherein the polymeric part of the first polypropylene composition (PC1) has one or more, preferably all, of the following properties:

   a) an ethylene content (C2(total)), determined by CRYSTEX analysis, in the range from 4.0 to 10.0 wt.-%;
   b) a soluble fraction (SF) content in the range from 10.0 to 30.0 wt.-% and a crystalline fraction (CF) content in the range from 70.0 to 90.0 wt.-%, both determined according to CRYSTEX analysis;
   c) an ethylene content of the soluble fraction (C2(SF)), determined by CRYSTEX analysis, in the range from 15.0 to 36.0 wt.-%;
   d) an ethylene content of the crystalline fraction (C2(CF)), determined by CRYSTEX analysis, in the range from 1.0 to 6.0 wt.-%;
   e) an intrinsic viscosity of the soluble fraction (iV(SF)) determined by CRYSTEX analysis, in the range from 1.00 to 3.00 dL/g;
   f) an intrinsic viscosity of the crystalline fraction (iV(CF)) determined by CRYSTEX analysis, in the range from 1.00 to 3.00 dL/g; and
   g) an intrinsic viscosity ratio (iV(SF)/iV(CF)), determined by CRYSTEX analysis, in the range from 0.60 to 1.20.

10. The polypropylene-based multilayer film (F) according to any one of the preceding claims, wherein the polymeric part of the multilayer film (F) has one or more, preferably all, of the following properties:

a) an ethylene content (C2(total)), determined by CRYSTEX analysis, in the range from 3.0 to 10.0 wt.-%;
b) a soluble fraction (SF) content in the range from 9 to 30 wt.-% and a crystalline fraction (CF) content in the range from 70 to 91 wt.-%, both determined according to CRYSTEX analysis;
c) an ethylene content of the soluble fraction (C2(SF)), determined by CRYSTEX analysis, in the range from 15.0 to 35.0 wt.-%;
d) an ethylene content of the crystalline fraction (C2(CF)), determined by CRYSTEX analysis, in the range from 1.0 to 6.0 wt.-%;
e) an intrinsic viscosity of the soluble fraction (iV(SF)) determined by CRYSTEX analysis, in the range from 120 to 3.50 dL/g;
f) an intrinsic viscosity of the crystalline fraction (iV(CF)) determined by CRYSTEX analysis, in the range from 1.50 to 3.00 dL/g;
g) an intrinsic viscosity (iV(total), determined by CRYSTEX analysis, in the range from 1.00 to 2.80 and
h) an intrinsic viscosity ratio (iV(SF)/iV(CF)), determined by CRYSTEX analysis, in the range from 0.50 to 1.50.

11. The polypropylene-based multilayer film (F) according to any one of the preceding claims, wherein the skin layer comprises at least 80 wt.-%, based on the total weight of the sealing layer, of a first propylene ethylene random copolymer (r-PP1) having one or more, preferably all, of the following properties:

a) a melt flow rate ($MFR_2$), determined according to ISO 1133 at 230 °C and 2.16 kg, in the range from 2.0 to 20.0 g/10 min;
b) an ethylene content (C2), determined by quantitative $^{13}$C-NMR spectroscopy, in the range from 1.0 to 5.0 wt.-%;
c) a xylene cold soluble (XCS) content, determined according to ISO 16152, in the range from 1.0 to 5.0 wt.-%;
d) a melting temperature (Tm), determined by differential scanning calorimetry (DSC) according to ISO 11357 / part 3 /method C2, in the range from 130 to 162 °C;
e) a crystallization temperature (Tc), determined by differential scanning calorimetry (DSC) according to ISO 11357 / part 3 /method C2, in the range from 90 to 115 °C; and
f) a content of 2,1-regiodefects, as determined by $^{13}$C-NMR spectroscopy, in the range from 0.00 to 0.20 mol-%.

12. The polypropylene-based multilayer film (F) according to any one of the preceding claims, wherein the sealing layer comprises at least 80 wt.-%, based on the total weight of the sealing layer, of a second propylene ethylene random copolymer (r-PP2) having one or more, preferably all, of the following properties:

a) a melt flow rate ($MFR_2$), determined according to ISO 1133 at 230 °C and 2.16 kg, in the range from 2.0 to 20.0 g/10 min;
b) an ethylene content (C2), determined by quantitative $^{13}$C-NMR spectroscopy, in the range from 1.0 to 5.0 wt.-%;
c) a xylene cold soluble (XCS) content, determined according to ISO 16152, in the range from 1.0 to 5.0 wt.-%;
d) a melting temperature (Tm), determined by differential scanning calorimetry (DSC) according to ISO 11357 / part 3 /method C2, in the range from 130 to 162 °C;
e) a crystallization temperature (Tc), determined by differential scanning calorimetry (DSC) according to ISO 11357 / part 3 /method C2, in the range from 90 to 115 °C; and
f) a content of 2,1-regiodefects, as determined by $^{13}$C-NMR spectroscopy, in the range from 0.00 to 0.20 mol-%.

13. The polypropylene-based multilayer film (F) according to any one of the preceding claims, wherein:

a) the skin layer has a thickness in the range from 5 to 30% of the total thickness of the polypropylene-based multilayer film (F);
b) the core layer has a thickness in the range from 20 to 93% of the total thickness of the polypropylene-based multilayer film (F); and
c) the sealing layer has a thickness in the range from 2 to 30% of the total thickness of the polypropylene-based multilayer film (F).

14. The polypropylene-based multilayer film (F) according to any one of the preceding claims, having a thickness in the range from 20 to 250 $\mu$m, more preferably in the range from 40 to 200 $\mu$m, most preferably in the range from 50 to 150 $\mu$m.

15. The polypropylene-based multilayer film (F) according to any one of the preceding claims, having one or more, preferably both, of the following properties:

   a) a seal strength in the machine direction, determined according to the method specified in the measurement methods at a sealing temperature of 140 °C, in the range from 28 to 100 N/15mm; and
   b) a seal strength in the machine direction, determined according to the method specified in the measurement methods at a sealing temperature of 150 °C, in the range from 23 to 100 N/15mm.

16. The polypropylene-based multilayer film (F) according to any one of the preceding claims, having one or more, preferably all, of the following properties:

   a) a haze value, determined according to ASTM D1003, in the range from 0 to 10.0%;
   b) a clarity value, determined according to ASTM D1003, in the range from 90.0 to 100%; and
   c) a total luminous transmittance value, determined according to ASTM D1003, in the range from 80 to 100%.

**EP 4 656 379 A1**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/362479 A1 (GAHLEITNER MARKUS [AT] ET AL) 25 November 2021 (2021-11-25) * paragraphs [0001], [0039], [0040], [0049], [0050] * * claims 1,3,8,10 * * tables 1-8 * ----- | 1-16 | INV. B32B27/08 B32B27/32 C08F2/00 C08F210/06 C08F210/16 C08L23/12 C08L23/16 |
| A | US 2023/071198 A1 (BACCARO LUCIO [IT] ET AL) 9 March 2023 (2023-03-09) * paragraphs [0080], [0104], [0122] * * claims 1,12,18 * ----- | 1-16 | |

**TECHNICAL FIELDS SEARCHED (IPC)**

B32B
C08F
C08L

The present search report has been drawn up for all claims

| Place of search | Date of completion of the search | Examiner |
|---|---|---|
| The Hague | 8 November 2024 | Yu, Sze Man |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8593

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2024

| Patent document cited in search report | | Publication date | Patent family member(s) | | Publication date |
|---|---|---|---|---|---|
| US 2021362479 | A1 | 25-11-2021 | CN | 112334303 A | 05-02-2021 |
| | | | EP | 3826844 A1 | 02-06-2021 |
| | | | ES | 2936243 T3 | 15-03-2023 |
| | | | US | 2021362479 A1 | 25-11-2021 |
| | | | WO | 2020020825 A1 | 30-01-2020 |
| US 2023071198 | A1 | 09-03-2023 | CN | 114929800 A | 19-08-2022 |
| | | | EP | 4103648 A1 | 21-12-2022 |
| | | | US | 2023071198 A1 | 09-03-2023 |
| | | | WO | 2021160773 A1 | 19-08-2021 |

EPO FORM P0459

For more details about this annex : see Official Journal of the European Patent Office, No. 12/82

## REFERENCES CITED IN THE DESCRIPTION

**Patent documents cited in the description**

- WO 2016066446 A1

**Non-patent literature cited in the description**

- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D. WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMON-TESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **LJILJANA JEREMIC** ; **ANDREAS ALBRECHT** ; **MARTINA SANDHOLZER** ; **MARKUS GAHLEIT-NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 6683-19-8
- *CHEMICAL ABSTRACTS*, 31570-04-4
- *CHEMICAL ABSTRACTS*, 1592-23-0
- *CHEMICAL ABSTRACTS*, 78-63-7
- *CHEMICAL ABSTRACTS*, 11097-59-9
- *CHEMICAL ABSTRACTS*, 112-84-5
- *CHEMICAL ABSTRACTS*, 7631-86-9